# EUROPÄISCHE PATENTSCHRIFT

(11) **EP 1 080 978 B1**
(45) Veröffentlichungstag und Bekanntmachung des Hinweises auf die Patenterteilung: **27.12.2006**
(21) Anmeldenummer: 00117235.2
(22) Anmeldetag: 14.08.2000
(51) Int. Cl.: B60K 37/06, B60K 35/00

(54) **Verfahren zum Betrieb eines Multifunktionsbedienelementes für ein Kraftfahrzeug**
Method to operate a multi-function control element for a vehicle
Procédure pour opérer un élément de commande multi-fonction pour véhicule

(30) Priorität: 03.09.1999 DE 19941955
(43) Veröffentlichungstag der Anmeldung: 07.03.2001
(73) Patentinhaber: Volkswagen Aktiengesellschaft, 38436 Wolfsburg (DE)
(72) Erfinder: Crull, Torsten, 38106 Braunschweig (DE); Liebig, Eckhard, 38518 Gifhorn (DE)

(56) Entgegenhaltungen:
- EP-A- 0 366 132
- EP-A- 0 701 926
- DE-A- 19 715 325
- DE-A- 19 730 297

## Beschreibung

Die Erfindung betrifft ein Verfahren zum Betrieb eines Multifunktionsbedienelementes für ein Kraftfahrzeug mit einem ebenen Display, auf welchem entsprechend zur gewählten Funktionszuweisung die Gerätefunktion als Auswahlliste angezeigt wird, gemäß Oberbegriff des Patentanspruches 1.

Sogenannte Multifunktionsbedienelemente und Verfahrensweisen zum Betrieb derselben sind im Stand der Technik schon vielfach bekannt. Hierbei werden Geräte innerhalb des Kraftfahrzeuges nicht mehr einzeln mit jeweiligen Displays versehen, sondern im Kraftfahrzeug ist ein zusammenhängendes gesamtes Display für alle Gerätebedienungen angeordnet.

Um dieses Display herum sind Funktionstasten angeordnet, denen entsprechende Funktionen zugewiesen werden können. Zu den im Kraftfahrzeug verfügbaren Geräten gehört die Audioanlage, welche das Radio, aber auch die Wiedergabe von Tonträgern wie CD-Spieler, Kassettenspieler und dgl. umfaßt. Darüber hinaus umfaßt das System die Darstellung des Navigationssystemes, dem Bordcomputer, die Telefonanlage und dgl. mehr.

Die Summe der zu steuernden Geräte ist dabei von der Ausstattung des jeweiligen Kraftfahrzeuges abhängig. Wichtig ist hierbei, daß ein solches Multifunktionsbedienelement für eine Vielzahl von Geräten leicht bedienbar sein muß. Zur weitergehenden Verhinderung einer unnötigen Ablenkung des Fahrzeugführers vom Verkehrsgeschehen müssen die oftmals menügeführten Funktionsweisen selbsterklärend sein. Die Anzeige auf dem Display muß aber überdies auch schnell und leicht lesbar sein, um eine übergebührliche Ablenkung vom Verkehrsgeschehen zu vermeiden.

Die Bedientasten müssen dabei auch gut erreichbar positioniert sein und der Bildschirm des Multifunktionsbedienelementes muß zudem auch leicht einsehbar sein. Im übrigen führt eine Zusammenfassung der Bedientasten auf eine im haptischen Bereich des Fahrzeugführers konzentrierten Position schon zu einer deutlichen Herabsetzung der Fahrerablenkung. Im Gegensatz dazu müßte der Fahrzeugführer ansonsten während des Verkehrsgeschehens immer wieder andere Positionen jeweils anderer Geräte finden und bedienen können. Insofern ist eine Konzentration an einen entsprechenden Bedienort innerhalb des Kraftfahrzeuges schon für sich gesehen eine Erleichterung auch im Sinne einer Erhöhung der Sicherheit durch Verminderung der Ablenkung.

Um die Bedienbarkeit mehrerer Geräte von einem zentralen Multifunktionsbedienelement realisieren zu können, ist beispielsweise aus der EP 0 701 926 A2 ein solches Multifunktionsbedienelement, insbesondere für den Gebrauch in Kraftfahrzeugen bekannt und beschrieben. Bei diesem Multifunktionsbedienelement, bei welchem ein Bildschirm sowie ein oder mehrere Tastenfelder Verwendung finden, werden Bedien- und Schaltelemente bzw. Tasten logisch zugewiesen. Die Zuweisung erfolgt dabei derart, daß eine übergeordnete Funktionsgruppe zunächst die ansprechende Einheit auswählt und darüber hinaus den untergeordneten Funktionsgruppen oder Bedienelementen sozusagen die Geräte zuweist, die nunmehr bedient werden sollen. Die Bedienelemente, d. h. die Tasten zur Bedienung sind randseitig neben oder unter dem Bildschirm verteilt angeordnet. Der Bildschirm selbst hat eine fest vorgegebene Abmessung, so daß eine Position der randseitigen Tasten nachhaltig ortsfest gegeben ist. Das hier dargestellte System geht jedoch von einer starren Bildschirmgeometrie aus, die natürlich auch die Funktionsvielfalt und damit auch den Bedienkomfort entsprechend einschränkt.

Zur Funktionszuweisung oder Gerätezuweisung des Displays als solches, oder des Displays samt den randseitig angeordneten Funktionstasten, sind in diesem Stand der Technik unterhalb des Displays Auswähltasten vorgesehen, über deren Betätigung das Display einem bestimmten Gerät, d. h. einem ausgewählten Gerät im Kraftfahrzeug zugeordnet werden kann. Es handelt sich bei den hier vorhandenen Auswahltasten um solche, d. h. von solchen Geräten, die ansonsten üblicherweise über ein eigenes Display verfügen. Dies betrifft beispielsweise den Audiobetrieb, den Telefonbetrieb, den Betrieb der Navigationseinrichtung sowie des Bordcomputers.

Will man jedoch weitergehende Funktionen dem Multifunktionsbedienelement zuweisen; also weitere Funktionen, die über die o. g. hinausgehen, so müssen auch solche Funktionen gehandhabt werden, die üblicherweise im Kraftfahrzeug nicht über Displays angezeigt werden. Dies betrifft die Zuschaltung von Aggregaten wie Sitzheizung, Heckscheibenheizung und weitere mehr. Es ist jedoch ein wesentliches Ziel, das Multifunktionsbedienelement auch tatsächlich multifunktional, am besten für alle im Fahrzeug vorgesehenen Funktionen einzurichten.

Beispielsweise ist es ansonsten üblich, die Betätigung der Sitzheizung durch Tastendruck zu realisieren. Hierzu befinden sich mit entsprechenden Symbolen versehene Funktionstasten ansonsten im Kraftfahrzeug und bei entsprechender Betätigung der besagten Funktionstasten, wird beispielsweise die besagte Sitzheizung eingeschaltet. Eine entsprechende Funktionsleuchte signalisiert den aktiven Zustand. Ein nochmaliges Betätigen schaltet dabei die Sitzheizung wiederum aus. Dies ist die übliche Betriebsweise.

Mit Hilfe eines Multifunktionsbedienelementes ist es jedoch möglich, die Sitzheizungsbetätigung differenzierter vornehmen zu können. Was in diesem Falle für die Betätigung der Sitzheizung von Vorteil wäre, gilt jedoch auch für alle übrigen weitergehenden Funktionen, für die normalerweise im Kraftfahrzeug keine Anzeige, also keine Displayanzeige vorgesehen ist.

Vielfach sind überdies Gerätefunktionen bekannt, die bei der Menüführung mit Listen arbeiten müssen. Solche Listen können beispielsweise im Navigationssystem auftauchen, beispielsweise bei der Auswahl von Städten. Darüber hinaus können sie auch auftreten im Telefonbetrieb, nämlich dann, wenn die Telefonbuchfunktion aufgerufen wird und beispielsweise alphabetisch sortiert Teilnehmer mit der entsprechend hinterlegten bzw. gespeicherten Telefonnummer dargestellt werden. Die Listen werden dann soweit das Display eine Anzeige derselben in einem entsprechenden Umfang gestattet, in entsprechender Weise angezeigt. Mit entsprechenden Zeilenmarkem kann man dann die besagten Zeilen aufrufen bzw. betätigen oder aktivieren. Dasselbe kann aber auch den Audiobetrieb betreffen, beispielsweise bei der Darstellung empfangbarer Sender.

Bei der Verwendung von Listen bei der menügeführten Betätigung über ein Multifunktionsbedienelement geht jedoch oftmals die Übersichtlichkeit verloren. Ein weiterer Aspekt ist, wie oben bereits ausgeführt, die Beachtung der niedrig zu haltenden Fahrerablenkung vom Verkehrsgeschehen.

Daher liegt der Erfindung davon ausgehend die Aufgabe zugrunde, ein Verfahren zum Betrieb eines Multifunktionsbedienelementes für ein Kraftfahrzeug dahingehend zu verbessern, daß auch bei Verwendung von Listen im menügeführten Betrieb eine verbesserte Lesbarkeit und damit eine verbesserte Bedienbarkeit erreicht wird.

Die gestellte Aufgabe ist bei einem Verfahren der gattungsgemäßen Art erfindungsgemäß durch die kennzeichnenden Merkmale des Patentanspruches 1 gelöst.

Weitere vorteilhafte Ausgestaltungen des erfindungsgemäßen Verfahrens sind in den abhängigen Ansprüchen dargelegt.

Kern der Erfindung besteht hierbei darin, daß die auf dem Display dargestellten Auswahllisten in dreidimensionaler Optik derart visualisiert werden, daß die Auswahllisten auf einer scheinbaren, drehbaren Walze konvex zum Betrachter hin visualisiert werden. Technisch bedeutet dies, daß auf dem ansonsten ebenen Display eine dreidimensionale Darstellung mit Tiefenwirkung generiert wird, die den Eindruck der Dreidimensionalität sehr deutlich hervorhebt. Mit Hilfe einer solchen 'scheinbaren' bzw einer scheinbar drehbaren Walze, auf der die Listen dargestellt sind, wird die entsprechend aktive Auswahllistenzeile auch im Hinblick auf die Größe, aber auch im Hinblick auf die Helligkeit und den Kontrast gegenüber den anderen übrigen Zeilen deutliche hervorgehoben. Damit entsteht eine erheblich leichtere Ablesbarkeit, die auch bei nur kurzen Einsehzeiten durch den Fahrzeugführer deutlich erkennbar und von den übrigen Zeilen auch deutlich abgehoben ist.

In weiterer vorteilhafter Ausgestaltung ist angegeben, daß die Darstellung nahe der oberen und unteren Ränder kleiner ist, als mittig und so ein walzenförmiger Eindruck mit horizontaler Achse entsteht. Die Konvexität kann jedoch auch anders ausgebildet sein, was eine Frage der Darstellung ist. Beispielsweise können hier auch Spalten dargestellt oder hervorgehoben werden, so daß die Darstellung nahe der seitlichen Ränder kleiner ist als mittig und so ein walzenförmiger Eindruck mit vertikaler Achse entsteht.

In weiterer vorteilhafter Ausgestaltung ist angegeben, daß die auswählbare Zeile oder die auswählbare Funktion der Zeile aus der Auswahlliste so dargestellt ist, daß sie auf der visualisierten Walze die mittige, hervorgehobenste Position einnimmt.

Weiterhin vorteilhaft ist, daß beim Durchfahren der Auswahlliste entsprechend eine sich drehende Walze visualisiert wird. Damit hebt sich die jeweils aktuelle Zeile, die beispielsweise auch funktionszugewiesen dann abgerufen oder betätigt werden kann, von den übrigen ab, ohne daß optisch und begrifflich die Zeile aus ihrem Kontext der Auswahlliste herausgelöst würde. Wichtig ist nämlich, auch den Aspekt zu erhalten, daß eine solche Liste immer einen Kontext bzw. eine Kontextinformation wiedergibt. Das heißt, sie gibt wieder, in welchem nahen Umfeld begrifflich die entsprechend gewählte oder hervorgehobene einzelne Zeile sich befindet. Dies ist ein Aspekt der logischen Zuordnung der entsprechenden Zeileninformation in das logische Umfeld der Liste. Durch diese visualisierte Walze und das Durchfahren und Durchdrehen der Walze, welches auf dem ebenen Display dreidimensional visualisiert wird, geht der besagte Kontext nicht verloren. Würde man eine tatsächliche körperhafte Walze vorsehen wollen, würde dies einen enormen mechanischen Aufwand bedingen und außerdem könnten die 'Walzeninformationen' nicht gewechselt werden. Hier jedoch wird einfach durch die dreidimensionale computergesteuerte Visualisierung auf einem ebenen Display die visuelle Wirkung einer Walze realisiert. Hierdurch können immer wieder andere Listen generiert werden.

Weiterhin ist vorteilhaft, daß die zuletzt ausgewählte Zeile auch bei visualisiertem Drehen der Walzen kenntlich gemacht bleibt, so daß man beispielsweise eine Vorentscheidung auf eine entsprechende Zeile treffen kann, die Walze bzw. die Auswahlliste aber dennoch zur weiteren Suche durchschalten kann.

In weiterer vorteilhafter Ausgestaltung ist das erfindungsgemäße Verfahren auf die Auswahllisten beispielsweise der Ortsnamen im Navigationssystem appliziert.

Eine weitere Applikation kann sein, die Auswahllisten beispielsweise der Telefonbuchfunktion der Telefonanlage im Kraftfahrzeug so zu generieren.

Eine weitere Applizierung kann gegeben sein, in dem die Auswahllisten von Titel- oder Senderanzeigen der Audioanlage auf diese Weise dargestellt werden.

In allen genannten Fällen werden die oben dargestellten Vorteile erreicht und multifunktional projiziert.

Die Erfindung ist anhand von Ausführungsbeispielen in der Zeichnung dargestellt.

Es zeigt:
- Figur 1:: Erfindungsgemäße Darstellungsweise im Navigationsbetrieb.
- Figur 2:: Erfindungsgemäße Vorgehensweise im Telefonbetrieb.
- Figur 3:: Erfindungsgemäße Vorgehensweise im Audiobetrieb.

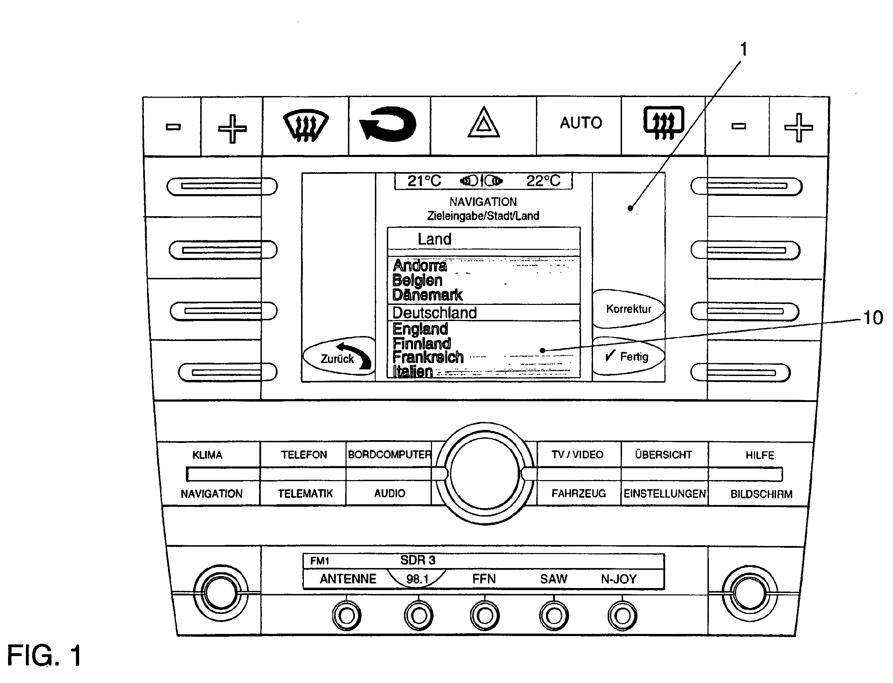

Figur 1 zeigt das Display 1 mit entsprechender walzenförmiger Darstellung der Auswahlliste 10, beispielsweise der Ländernamen im Navigationssystem. Dabei ist die entsprechend gewählte Zeile hervorgehoben, und auf dem visualisierten, optisch höchsten Punkt der imäginären Walze im Display, ist in diesem Falle der Ländername Deutschland dargestellt. Wird dieses Land ausgewählt, so erfolgt eine entsprechende farbliche oder entsprechend kontrastierte Darstellung der betreffenden Zeile, wobei dann die Auswahlliste, d. h. in diesem Fall die visualisierte Walze weiterhin gedreht werden kann, um auch weitere Städte oder Ortsnamen oder Länderkennungen durchzuschalten.

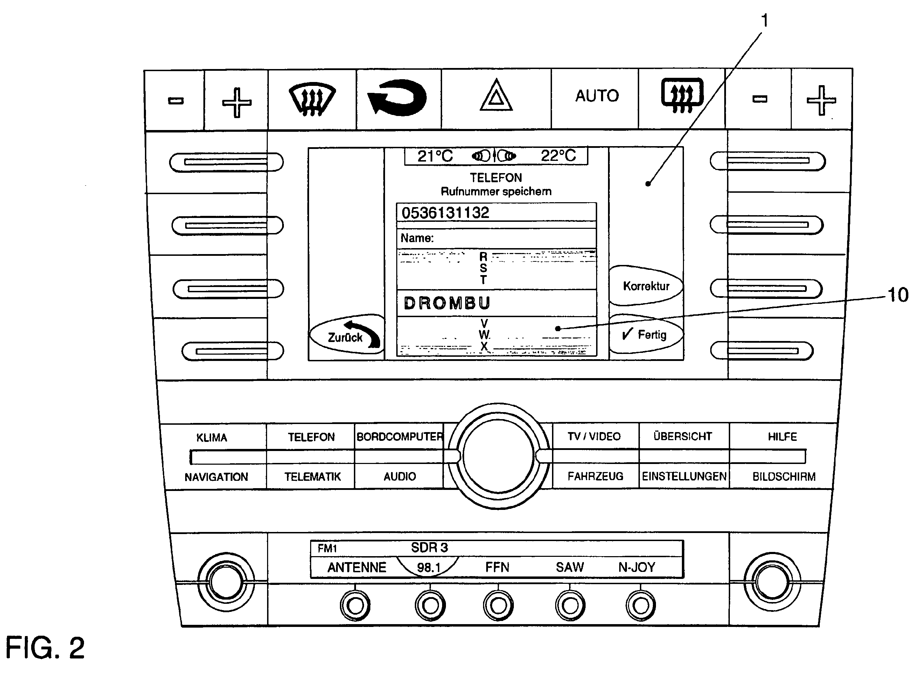

Figur 2 zeigt die Anwendung bei einer Telefonanlage. Vielfach werden in Telefonanlagen zur Eingabe alphanumerischer Eingaben sog. Speller verwendet. Diese Speller werden dargestellt durch ein auf das Display aufgerufenes Alphabet und der Darstellung der Ziffern von 0 bis 9. Die Betriebsweise ist dabei so, daß man auf dem Multifunktionsbedienelement nicht für jeden Buchstaben des Alphabets oder für jede Ziffer von 0 bis 9 jeweils separate Tasten vorsehen kann. Also werden die Buchstaben einzeln am Speller ausgewählt, in dem man mit einem Scanner auf den entsprechenden Buchstaben geht, beispielsweise indem man die Liste durchfahren läßt und nur an der entsprechenden Buchstabenstelle hält und auswählt, der Buchstabe dann einem Wort oder einem bereits ausgewählten Buchstaben zu einem Wort angereiht wird. Hierbei sind lediglich die Funktionstastenbetätigungen vorwärts, rückwärts und auswählen, ggf. auch löschen oder zurück, oder Korrektur notwendig. Die besagte Spellerfunktion kann hierbei im Telefonbetrieb in Verbindung mit der erfindungsgemäßen Verfahrensweise von großem Vorteil sein.

Das Alphabet wird somit wie eine Auswahlliste 10 auf einer Walze dargestellt, die mehr oder weniger schnell betätigt werden kann, und zu diesem Zweck auf dem Display 1 visualisiert wird. Hierdurch bedarf es nicht, wie im Stand der Technik oftmals üblich, einer zweidimensionalen Darstellung des Alphabetes, und somit einer notwendigen Auswahlbewegung sowohl in der Horizontalen als auch in der Vertikalen, sondern hier bedarf es nur einer Betätigung aufwärts oder abwärts der Walze. Mit Hilfe der so visualisierten Walze kann die jeweils aktive auswählbare Zeile bzw. der jeweils auswählbare Buchstabe hervorgehoben dargestellt sein, nämlich an der optisch visualisierten höchsten Stelle der zum Fahrer hin konvex gekrümmt dargestellten Walze.

Denkbar wäre im Telefonbetrieb auch die Telefonbuchfunktion, also die Namenslisten auf einer solchen Walze darzustellen, um sie dann auszuwählen um die entsprechend darauf hinterlegten Telefonnummern aktivieren zu können.

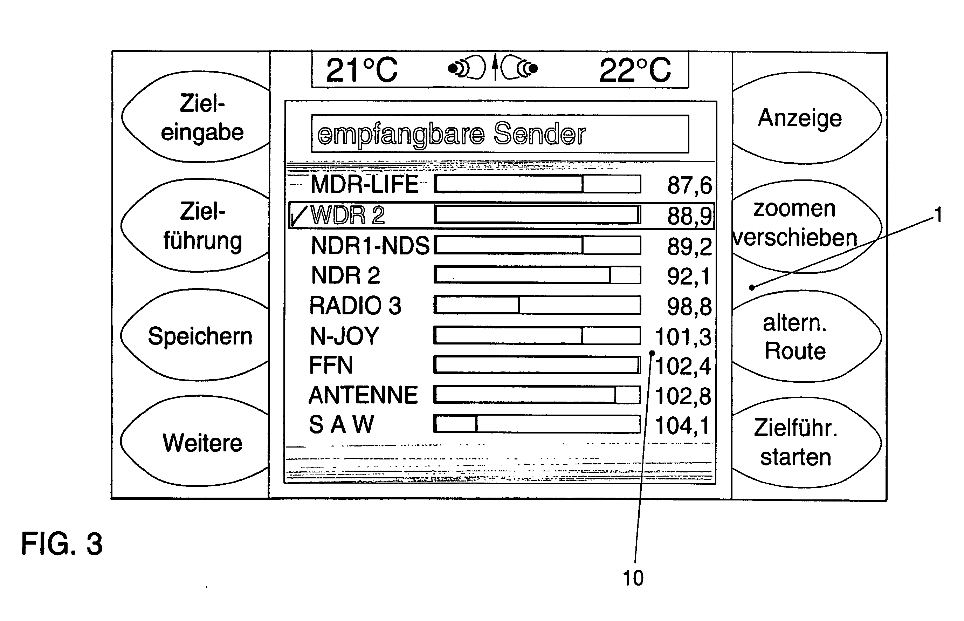

Ein weiteres Ausführungsbeispiel zeigt Figur 3. Hierbei wird im Audiobetrieb eine Liste der empfangbaren Sender mit ihren Pegeln und ihrer Frequenz dargestellt. Die Darstellung erfolgt hier zeilenweise. Auch hierbei entstehen wiederum Auswahllisten 10, die sortiert sind nach aufsteigender oder absteigender Empfangsfrequenz, wobei die Sender dann zeilenweise auch hierbei in Walzendarstellung auf dem Display generiert werden.

In allen der genannten Ausführungsbeispiele ist die Bedienung durch die so visualisierte Walze sehr einfach und für den Bediener sehr einprägsam und leicht handhabbar. Durch die leichte Bedienbarkeit und die enorme Übersichtlichkeit, die eine solche Verfahrensweise gewinnt, wird die notwendige Aufmerksamkeit zur Bedienung auf ein absolutes Minimum reduziert. Im übrigen wird der Bedienkomfort auch im Hinblick auf weitergehende technische Möglichkeiten erheblich gesteigert.

## Patentansprüche

1. Verfahren zum Betrieb eines Multifunktionsbedienelementes für ein Kraftfahrzeug mit einem ebenen Display (1), auf welchem entsprechend zur gewählten Funktionszuweisung die Gerätefunktion als Auswahlliste (10) angezeigt wird,
**dadurch gekennzeichnet,**
**daß** die auf dem Display (1) dargestellten Auswahllisten (10) in dreidimensionaler Optik derart visualisiert werden, daß die Auswahlliste (10) auf einer scheinbaren drehbaren Walze konvex zum Betrachter hin visualisiert werden.

2. Verfahren nach Anspruch 1,
**dadurch gekennzeichnet,**
**daß** die Darstellung nahe der oberen und unteren Ränder kleiner ist als mittig, und so ein walzenförmiger Eindruck mit horizontaler Achse entsteht.

3. Verfahren nach Anspruch 1,
**dadurch gekennzeichnet,**
**daß** die Darstellung nahe den seitlichen Rändern kleiner ist als mittig, und so ein walzenförmiger Eindruck mit vertikaler Achse entsteht.

4. Verfahren nach einem der vorhergehenden Ansprüche,
**dadurch gekennzeichnet,**
**daß** die auswählbare Zeile/Funktion aus der Auswahlliste (10) so dargestellt ist, daß sie auf der visualisierten Walze die mittige hervorgehobenste Position einnimmt.

5. Verfahren nach einem der vorhergehenden Ansprüche,
**dadurch gekennzeichnet,**
**daß** beim Durchfahren der Auswahlliste (10) entsprechend eine sich drehende Walze visualisiert wird.

6. Verfahren nach einem der vorhergehenden Ansprüche,
**dadurch gekennzeichnet,**
**daß** die zuletzt ausgewählte Zeile auch bei visualisiertem Drehen der Walze kenntlich gemacht wird.

7. Verfahren nach einem der vorhergehenden Ansprüche,
**dadurch gekennzeichnet,**
**daß** die Auswahllisten (10) in Verbindung mit dem Navigationssystembetrieb entsprechend dargestellt werden.

8. Verfahren nach einem der vorhergehenden Ansprüche,
**dadurch gekennzeichnet,**
**daß** die Auswahllisten (10) in der entsprechenden Weise im Telefonbetrieb dargestellt werden.

9. Verfahren nach einem der vorhergehenden Ansprüche,
**dadurch gekennzeichnet,**
**daß** die Auswahllisten (10) in Verbindung mit der Titel- oder Senderanzeige der Audioanlage in entsprechender Weise dargestellt werden.

## Claims

1. Method of operating a multi-functional control element for a motor vehicle having a flat display (1) on which the device function is displayed as a selection list (10) according to the selected functional assignment, **characterized in that** the selection lists (10) which are represented on the display (1) are displayed in the three-dimensional optical system in such a way that the selection lists (10) are displayed to the viewer in a convex fashion on a virtual rotatable roller.

2. Method according to Claim 1, **characterized in that** the representation near to the upper and lower edges is smaller than in the centre and a roller-shaped impression with a horizontal axis is thus produced.

3. Method according to Claim 1, **characterized in that** the representation near to the lateral edges is smaller than in the centre, and a roller-shaped impression with a vertical axis is thus produced.

4. Method according to one of the preceding claims, **characterized in that** the selectable line/function from the selection list (10) is represented in such a way that it assumes the central, most highlighted position on the displayed roller.

5. Method according to one of the preceding claims, **characterized in that** as the selection list (10) is run through, a rotating roller is correspondingly displayed.

6. Method according to one of the preceding claims, **characterized in that** the row which is selected last is also indicated during the displayed rotation of the roller.

7. Method according to one of the preceding claims, **characterized in that** the selection lists (10) are correspondingly displayed in conjunction with the operation of the navigation system.

8. Method according to one of the preceding claims, **characterized in that** the selection lists (10) are displayed in a corresponding way in the telephone mode.

9. Method according to one of the preceding claims, **characterized in that** the selection lists (10) are displayed in a corresponding way in conjunction with the title display or transmitter display of the audio system.

## Revendications

1. Procédé pour faire fonctionner un élément de commande multifonction pour un véhicule automobile comprenant un afficheur plan (1) sur lequel la fonction de l'appareil est affichée sous la forme d'une liste de sélection (10) en fonction de l'affectation de fonction choisie, **caractérisé en ce que** les listes de sélection (10) représentées sur l'afficheur (1) sont visualisées dans une optique tridimensionnelle de telle sorte que les listes de sélection (10) soient visualisées sur un rouleau qui semble tourner et qui est convexe en direction de l'observateur.

2. Procédé selon la revendication 1, **caractérisé en ce que** la représentation à proximité des bords supérieur et inférieur est plus petite qu'au centre et produit ainsi une impression de rouleau ayant un axe horizontal.

3. Procédé selon la revendication 1, **caractérisé en ce que** la représentation à proximité des bords latéraux est plus petite qu'au centre et produit ainsi une impression de rouleau ayant un axe vertical.

4. Procédé selon l'une des revendications précédentes, **caractérisé en ce que** la ligne/fonction sélectionnée dans la liste de sélection (10) est représentée de telle sorte qu'elle adopte la position centrale la plus en évidence sur le rouleau visualisé.

5. Procédé selon l'une des revendications précédentes, **caractérisé en ce qu'**un rouleau qui tourne est visualisé en conséquence en parcourant la liste de sélection (10).

6. Procédé selon l'une des revendications précédentes, **caractérisé en ce que** la dernière ligne sélectionnée est signalée même lors de la rotation visualisée du rouleau.

7. Procédé selon l'une des revendications précédentes, **caractérisé en ce que** les listes de sélection (10) sont représentées en conséquence en liaison avec le fonctionnement du système de navigation.

8. Procédé selon l'une des revendications précédentes, **caractérisé en ce que** les listes de sélection (10) sont représentées de la manière correspondante en mode téléphone.

9. Procédé selon l'une des revendications précédentes, **caractérisé en ce que** les listes de sélection (10) sont représentées en conséquence en liaison avec l'indicateur de titre ou d'émetteur de l'équipement audio.
